# EUROPÄISCHE PATENTSCHRIFT

(11) **EP 1 631 013 B1**
(45) Veröffentlichungstag und Bekanntmachung des Hinweises auf die Patenterteilung: **03.09.2008**
(21) Anmeldenummer: 05016053.0
(22) Anmeldetag: 23.07.2005
(51) Int. Cl.: H04L 12/40, H04L 12/42

(54) **Hauptstation und Nebenstation in einem geschalteten Datennetzwerk sowie ein Verfahren zum Übertragen von Daten in einem solchen Netzwerk**
Main station and auxiliary station in a switched data network and method for transmitting data in such a network
Station principale et station subsidiaire dans un réseau de données à commutation et procédé pour transmettre des données dans un réseau correspondant

(30) Priorität: 24.08.2004 DE 102004041093
(43) Veröffentlichungstag der Anmeldung: 01.03.2006
(73) Patentinhaber: Bosch Rexroth AG, 70184 Stuttgart (DE)
(72) Erfinder: Kynast, Rigobert, 97816 Lohr am Main (DE); Leurs, Ludwig, 97816 Lohr am Main (DE); Schmid, Thomas, 97840 Haferlohr (DE); Schultze, Stephan, 97816 Lohr am Main (DE)

(56) Entgegenhaltungen:
- DE-A1- 3 413 144
- DE-A1- 10 058 524
- US-B1- 6 266 748

## Beschreibung

Die Erfindung betrifft eine Hauptstation und eine Nebenstation in einem Netzwerk z. B. in einem Feldbusnetzwerk und insbesondere das Empfangen von externen Daten und zum Senden von gerätsintern bereitgestellten Daten über das Netzwerk. Die Erfindung betrifft weiterhin ein Verfahren zum Übertragen von Daten in einem Netzwerk.

Datennetzwerke, beispielsweise ein Feldbusnetzwerk, weisen üblicherweise eine Hauptstation und eine oder mehrere Nebenstationen auf, die über Punkt-zu-Punkt-Verbindungen miteinander verbunden sind. Dabei können die Hauptstation und die Nebenstation ein Ringnetzwerk bilden, wobei die Hauptstation über eine unidirektionale Netzwerkverbindung mit einem Dateneingang der ersten Nebenstation, ein Datenausgang der ersten Nebenstation mit einem Dateneingang einer zweiten Nebenstation, ein Datenausgang der zweiten Nebenstation mit einem Dateneingang einer dritten Nebenstation usw. verbunden sind. Der Datenausgang der letzten Nebenstation ist dabei mit einem Dateneingang der Hauptstation verbunden.

Alternativ kann auch eine Netzwerktopologie vorgesehen sein, die linienförmig ist, wobei die Hauptstation und die Nebenstationen miteinander über Netzwerkverbindungen verbunden sind, die zwei Kanäle für die Hin- und Rückrichtung aufweisen.

Hauptkennzeichen von Datennetzwerken ist es, dass die in den Nebenstationen empfangenen Daten über einen Zwischenverstärker weitergereicht werden, wobei je nach Bedarf der Zeitpunkt des Weiterreichens gegenüber dem Empfang verzögert werden kann und die empfangenen Daten ganz oder teilweise zur weiteren Verarbeitung und Auswertung in der Nebenstation bereitgestellt werden. Die Übertragung der Daten kann beispielsweise in Datenpaketen erfolgen.

Die Kommunikation auf einem so gebildeten Datennetzwerk kann beispielsweise wahlfrei erfolgen, d.h., dass die Kommunikationszeit, wenn eine Station über seinen Datenausgang ein Datenpaket auf das Datennetzwerk ausgibt, nicht fest vorgegeben ist. Dabei, kann jede Station zu einem beliebigen Zeitpunkt das Datenpaket über seinen Datenausgang senden. Da bei einem solchen IP-Netzwerkprotokoll (Internet-Protokoll) die Nebenstationen des Netzwerks an ihrem Dateneingang eintreffende Datenpakete in der Regel unmittelbar über den Zwischenverstärker an den Datenausgang ausgeben, kann es nach Beginn eines Sendens eines Datenpaketes zu Überlagerungen von zwei Datenpaketen kommen, wenn während des Sendens ein externes Datenpaket empfangen wird. Dies kann von einem nachfolgenden Netzwerkteilnehmer nicht mehr interpretiert werden.

Darüber hinaus ist es bei Datennetzwerken möglich, zwei oder mehrere Kommunikationskanäle in dafür reservierten zeitlichen Bereichen vorzusehen. Neben dem oben beschriebenen IP-Kommunikationskanal kann auch ein zeitlicher Bereich vorgesehen sein, der als Echtzeitkanal bezeichnet wird und auf dem Datenpakete in geordneter Abfolge übertragen werden, wobei ein zeitlich definiertes Zeitfenster in mindestens einem der Datenpakete einer jeweiligen Nebenstation zugeordnet ist, so dass die Nebenstation die jeweils ihr zugeordneten Daten aus dem Datenpaket auslesen kann.

Weiterhin ist in einem weiteren Datenpaket ein Zeitfenster für die Nebenstation reserviert, in die die Nebenstation Daten einfügen kann, während die Nebenstation das empfangene Datenpaket zu seinem Datenausgang weiterleitet.

Aus der DE 100 58 524 A1 sind ein System und ein Verfahren zur parallelen Übertragung von echtzeitkritischen und nicht echtzeitkritischen Daten über schaltbare.Datennetze bekannt.

Dabei ist das Datennetz zwischen wenigstens zwei Teilnehmern aufgebaut, wobei die Daten in wenigstens einem Übertragungszyklus mit einstellbarer Zeitdauer übertragen werden und jeder Übertragungszyklus in wenigstens einen ersten Bereich zur Übertragung von echtzeitkritischen Daten und wenigstens einen zweiten Bereich zur Übertragung von nicht echtzeitkritischen Daten unterteilt ist.

Aus der DE 34 13 144 A1 ist ein digitales lokales Kommunikationssystem bekannt. Bei diesem System sind die mit Endgeräten in Verbindung stehenden Stationen je an einen Sende- und an einer dazu parallelen Empfangsleitung mit gleichsinnig oder gegensinnig gerichtetem Nachrichtenfluss angeschlossen.

Insbesondere bei dem IP-Kommunikationskanal besteht das Problem, dass zwei sich überlagernde Datenpakete-unbrauchbar werden und dadurch die Datenkommunikation auf dem Datennetzwerk behindert wird.

Dieses Problem wird durch die Netzwerkstation nach Anspruch 1 sowie durch das Verfahren zum Empfangen und Senden von Daten in einem Datennetzwerk nach Anspruch 5 gelöst.

Weitere vorteilhafte Ausgestaltungen der Erfindung sind in den abhängigen Ansprüchen angegeben.

Gemäß einem ersten Aspekt der vorliegenden Erfindung ist eine Netzwerkstation für ein Datennetzwerk zum Empfangen von externen Daten und zum Senden von gerätsintern bereitgestellten Daten vorgesehen. Die Netzwerkstation weist einen Zwischenverstärker auf, um ein an dem Dateneingang empfangenes externes Datenpaket an einem Datenausgang auszugeben. Mithilfe einer ersten Datenbereitstellungseinheit wird ein aus den bereitgestellten Daten generiertes internes Datenpaket über den Datenausgang gesendet. Mithilfe einer Schalteinrichtung kann der Datenpfad zwischen dem Dateneingang und dem Datenausgang unterbrochen werden. Eine Steuereinheit ist mit der Schalteinrichtung verbunden, um in einem ersten Betriebsmodus das Ausgeben des empfangenen externen Datenpakets über den Datenausgang zu blockieren, wenn das interne Datenpaket mithilfe der Datensendeeinheit ausgegeben wird. Das Ausgeben des empfangenen externen Datenpakets mithilfe des Zwischenverstärkers über den Datenausgang wird zugelassen, wenn kein Datenpaket über die erste Datenbereitstellungseinheit ausgegeben wird.

Auf diese Weise wird bei einer IP-Kommunikation, d.h. bei einer wahlfreien Kommunikation jeder der Netzwerkstationen über das Datennetzwerk sichergestellt, dass wenn die Netzwerkstation ein internes Datenpaket sendet, das empfangene externe Datenpaket nicht weitergeleitet wird. So kommt es während des Sendens des internen Datenpakets mit den bereitgestellten Daten nicht zu einer Überlagerung von externen und internen Datenpaketen, die zu einer Unlesbarkeit der darin enthaltenen Daten führen würde.

Die Erfindung betrifft also ein geschaltetes Datennetzwerk, wobei in diesem Zusammenhang geschaltet bedeutet, dass über eine erfindungsgemäße Schalteinrichtung bzw. nach dem erfindungsgemäßen Verfahren der Datenpfad zwischen dem jeweiligen Dateneingang und Datenausgang - wie oben beschrieben - schaltbar, d.h. zu öffnen und zu unterbrechen bzw. zu blockieren ist.

Insbesondere im Zusammenhang mit dem Ethernet-Netzwerkstandard (Protokoll, Netzwerktopologie und -hardware) sind geschaltete Datennetzwerke (Switched Ethernet) und Netzwerke mit Verstärkern (Repeater) bekannt; die Switched Ethernet-Technologie wird auch als geschaltetes Datennetzwerk bezeichnet, kann sich aber von einem im Erfindungssinne geschalteten Datennetzwerk unterscheiden.

Insbesondere kann mit der Erfindung ein echtzeitfähiges, auf dem Ethernet-Standard basierendes Datennetzwerk geschaffen werden - insbesondere auch für Datennetzwerke mit Repeatern, die gerade nicht über eine Schaltfunktion im Sinne des Switched Ethernet verfügen (in diesem Fall bietet die Erfindung den Vorteil, dass günstige und schnelle Repeater verwendet werden können und trotzdem die Überlagerung von Paketen zuverlässig verhindert werden kann).

Gemäß einer weiteren Ausführungsform der Erfindung kann die Steuereinheit die Schalteinrichtung so steuern, dass in dem ersten Betriebsmodus das Ausgeben des empfangenen externen Datenpakets mithilfe des Zwischenverstärkers über den Datenausgang solange blockiert wird, bis das empfangene externe Datenpaket beendet ist. Dies hat den Vorteil, dass nach dem Senden des internen Datenpakets durch die erste Datensendeeinheit nicht noch ein Teil eines empfangenen externen Datenpaketes angefügt wird, das von einem Empfänger nicht interpretiert werden kann, da es unvollständig ist. D.h., das empfangene externe Datenpaket wird solange nicht über den Zwischenverstärker an den Datenausgang ausgegeben, bis dieses Datenpaket am Dateneingang beendet ist. Erst dann kann der Dateneingang über den Zwischenverstärker mit dem Datenausgang gekoppelt werden, so dass nachfolgend empfangene externe Datenpakete wieder über den Zwischenverstärker weitergeleitet werden können.

Gemäß einer weiteren Ausführungsform der Erfindung arbeitet die Steuereinheit zyklisch während eines ersten Zeitabschnitts in dem ersten Betriebsmodus und während eines zweiten Zeitabschnitts in einem zweiten Betriebsmodus. Eine zweite Datenbereitstellungseinheit zum Senden von bereitgestellten Daten ist vorgesehen. Die Steuereinheit ist mit der Schalteinrichtung so verbunden, um in dem zweiten Betriebsmodus den Datenausgang wechselweise so mit dem Zwischenverstärker und der zweiten Datenbereitstellungseinheit zu verbinden, dass ein Teil eines bestimmten an dem Dateneingang empfangenen externen Datenpaket von dem Zwischenverstärker an dem Datenausgang ausgegeben wird und dass die bereitgestellten Daten an einer zeitlich bestimmten, der Netzwerkstation zugeordneten Position des bestimmten Datenpakets in das Datenpaket eingefügt werden. Auf diese Weise ist es möglich, dass die Netzwerkstation in einem Datennetzwerk eingesetzt werden kann, das zwei zeitlich definierte Kommunikationskanäle aufweist. Dabei ist in dem Betriebsmodus ein IP-Kommunikationskanal vorgesehen, bei dem ein an einem Dateneingang eintreffendes externes Datenpaket nicht weitergeleitet wird, wenn zu diesem Zeitpunkt ein internes Datenpaket mit in dem Netzwerkgerät bereitgestellten Daten gesendet wird.

Es kann eine Prüfdateneinheit vorgesehen sein, um zumindest in dem zweiten Betriebsmodus das empfangene externe Datenpaket von dem Eingangsanschluss und die bereitgestellten Daten von der zweiten Datensendeeinheit zu erhalten und ein Prüfdatum zu generieren, wobei die Steuereinheit die Schalteinrichtung so ansteuert, dass an einer weiteren zeitlich bestimmten Position des empfangenen Datenpakets das Prüfdatum dem empfangenen Datenpaket hinzugefügt wird.

Gemäß einem weiteren Aspekt der vorliegenden Erfindung ist ein Verfahren zum Empfangen von externen Daten und Senden von gerätsintern bereitgestellten Daten in einem Datennetzwerk vorgesehen. In einem ersten Betriebsmodus umfasst das Verfahren folgende Schritte: Bereitstellen eines internen Datenpakets, das die gerätsintern bereitgestellten Daten umfasst, Ausgeben des internen Datenpakets über einen Datenausgang, Blockieren des Ausgebens eines über das Datennetzwerk empfangenen externen Datenpakets, solange das bereitgestellte interne Datenpaket auf das Datennetzwerk ausgegeben wird.

Weiterhin kann vorgesehen sein, dass das Ausgeben des empfangenen externen Datenpakets auf das Datennetzwerk nach dem Ende des Ausgebens des bereitgestellten internen Datenpakets solange blockiert wird, bis das empfangene externe Datenpaket beendet ist. Auf diese Weise kann verhindert werden, dass lediglich ein hinterer Teil eines empfangenen externen Datenpakets in dem Datennetzwerk weitergeleitet wird, das unter Umständen fehlerhaft von einer Netzwerkstation interpretiert werden würde.

Gemäß einer weiteren Ausführungsform der Erfindung kann während eines ersten Zeitabschnitts der erste Betriebsmodus und während eines zweiten Zeitabschnitts ein zweiter Betriebsmodus eingenommen werden. Dabei bildet der erste Betriebsmodus einen IP-Kommunikationskanal und der zweite Betriebsmodus einen Echtzeit-Kommunikations-Kanal, wobei der zweite Betriebsmodus die folgenden Schritte umfasst: Senden eines Teils eines bestimmten empfangenen Datenpakets über das Datennetzwerk; Einfügen der bereitgestellten internen Daten an einer zeitlich bestimmten Position in das bestimmte Datenpaket. Auf diese Weise können die bereitgestellten Daten in ein Zeitfenster eines vorbestimmten Datenpakets in dem Echtzeitkommunikationskanal eingefügt werden, wodurch das empfangene Datenpaket mit Daten gefüllt wird, die über das Datennetzwerk weiter übertragen werden. Weiterhin können in dem zweiten Betriebsmodus die Schritte ausgeführt werden: Bestimmen eines Prüfdatums aus dem bestimmten empfangenen externen Datenpaket und den bereitgestellten Daten und Einfügen des Prüfdatums bei einer weiteren zeitlich bestimmten Position in das empfangene externe Datenpaket.

Bevorzugte Ausführungsformen der Erfindung werden nachfolgend anhand der beigefügten Zeichnungen näher erläutert. Es zeigen:
Fig. 1a und 1b zwei mögliche Netzwerktopologien für ein Netzwerk mit einer Hauptstation und mehreren Nebenstationen;
Fig. 2 den Aufbau der übertragenen Datenpakete auf dem Netzwerk in zwei zeitlich getrennten Kommunikationskanälen;
Fig. 3 ein Blockschaltbild eines erfindungsgemäßen Netzwerkgerätes; und
Figur 4 ein Datenpaket-Zeitdiagramm während eines IP-Kommunikationskanals.

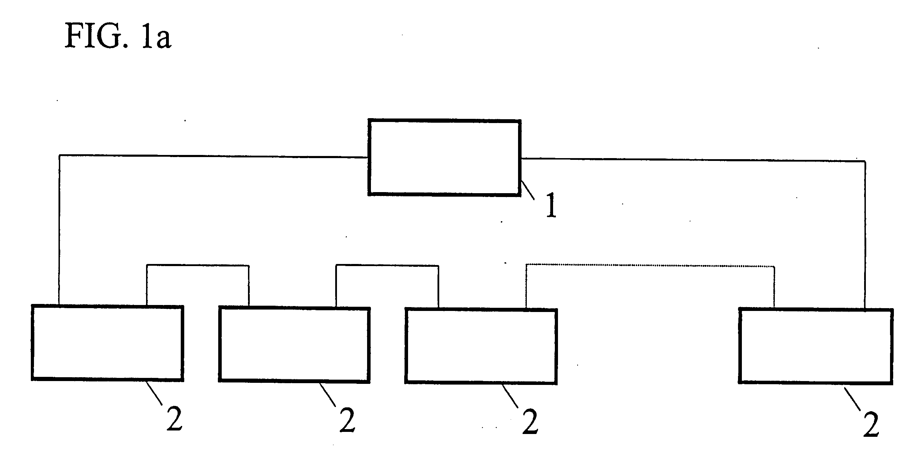

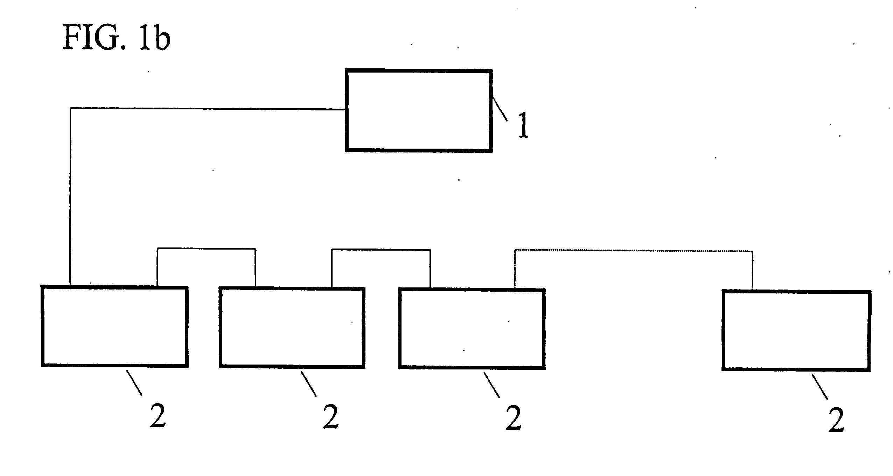

Die Figuren 1a und 1b zeigen zwei mögliche Netzwerktopologien für ein Datennetz, z.B. für ein Feldbusnetzwerk. In der in Fig. 1a gezeigten Netzwerktopologie steht eine Hauptstation 1 mit Nebenstationen 2 über Punkt-zu-Punkt-Verbindungen in Verbindung, wobei die Hauptstation 1 eine Datenverbindung zu einem Dateneingang einer ersten Nebenstation, ein Datenausgang der ersten Nebenstation mit einem Dateneingang einer zweiten Nebenstation, ein Datenausgang der zweiten Nebenstation mit einem Dateneingang einer dritten Nebenstation usw. aufweist. Der Datenausgang einer letzten Nebenstation steht mit einem Dateneingang der Hauptstation 1 in Verbindung, so dass ein Ringnetzwerk gebildet wird. Ein von der Hauptstation 1 ausgesendetes Datum wird von der ersten Nebenstation 2 empfangen und über ihren Datenausgang an die nächste Nebenstation weitergeleitet, bis das Datenpaket von der letzten Nebenstation wieder zu der Hauptstation 1 zurückgeleitet wird. Das Weiterreichen eines an einem Dateneingang einer Nebenstation 2 empfangenen Datenpakets erfolgt in der Regel über Zwischenverstärker (nicht gezeigt) in der jeweiligen Nebenstation 2.

Ein alternativer Netzwerkaufbau ist in Fig. 1b dargestellt. Dort sind die Hauptstation 1 und die Nebenstationen 2 in einer Linie angeordnet, wobei die Nebenstationen bezüglich der Hauptstation 1 mit der vorherigen Nebenstation 2 als auch mit der nachfolgenden Nebenstation 2 in bidirektionaler Weise kommunizieren können. Ein Datum, was beispielsweise eine Nebenstation 2 von ihrer vorhergehenden Nebenstation empfängt, wird dort ebenfalls über einen Zwischenverstärker an die nachfolgende Nebenstation weitergeleitet und umgekehrt.

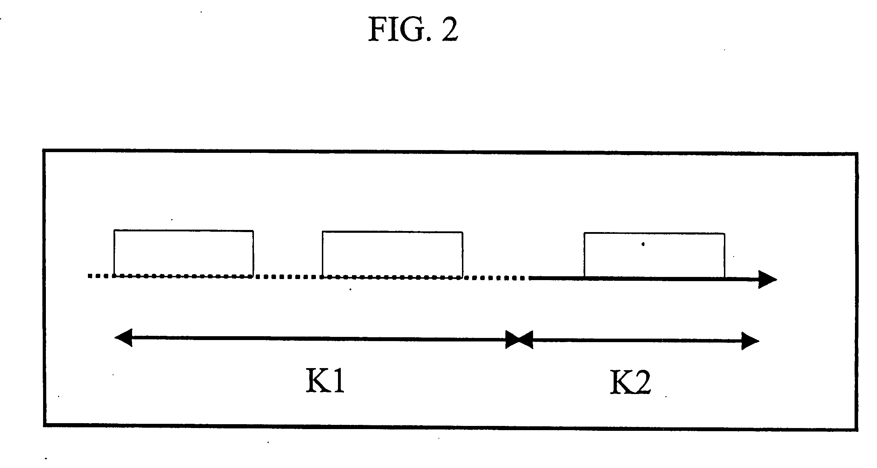

Ein mögliches Kommunikationsprotokoll umfasst die Übertragung von Datenpaketen in zeitlich definierten Kanälen. Wie in Fig. 2 dargestellt ist, weist ein Kommunikationszyklus einen ersten Kanal K1, einen Echtzeitkommunikationskanal, und einen zweiten Kanal K2, einen IP-Kommunikationskanal, auf. Der Echtzeitkommunikationskanal und der IP-Kommunikationskanal werden nacheinander im zeitlichen Wechsel als zweiter bzw. erster Betriebsmodus von Haupt- und Nebenstationen 1, 2 des damit gebildeten Netzwerks eingenommen.

Während des Echtzeitkommunikationskanals sendet die Hauptstation 1 Datenpakete aus, in denen in jeweils der entsprechenden Nebenstation 2 zugeordneten Zeitfenstern entsprechende der jeweiligen Nebenstation 2 zugeordnete Daten enthalten sind. In mindestens einem der Datenpakete, die die Hauptstation aussendet, ist es jeder der Nebenstationen 2 möglich, an einem für sie reservierten und ihr zugeordneten Zeitfenster Daten einzufügen und somit das Datenpaket beim Weiterreichen zu verändern. Die Hauptstation 1 empfängt das modifizierte Datenpaket und wertet dann das erhaltene von den Nebenstationen 2 modifizierte Datenpaket aus und kann durch Zuordnung der in dem jeweiligen Zeitfenster enthaltenen Daten zu der jeweiligen Nebenstation 2 die entsprechenden Daten von der Nebenstation 2 empfangen.

In dem IP-Kommunikationskanal können die Netzwerkstationen im Wesentlichen wahlfrei miteinander kommunizieren. Jede der Netzwerkstationen kann ein Datenpaket mit zu sendenden Daten aussenden, wenn die jeweilige Netzwerkstation an ihrem Dateneingang kein Datenpaket empfängt. Üblicherweise sind im IP-Kommunikationskanal die Nebenstationen 2 so geschaltet, dass grundsätzlich ein an dem Dateneingang eintreffendes externes Datenpaket über einen Zwischenverstärker verstärkt wird und an dem Datenausgang ausgegeben wird. Hinzu kommt, während des Echtzeitkommunikationskanales, dass Daten in das über den Zwischenverstärker übertragene Datenpaket eingefügt werden, ohne jedoch das empfangene und weiterzuleitende externe Datenpaket zwischenzuspeichern oder in sonstiger Weise zu verzögern. Eine solche Einstellung führt während des IP-Kommunikationskanals unter Umständen zu ungültigen Daten. Wenn nämlich nach dem Beginn des Aussendens des internen Datenpakets mit den bereitgestellten Daten durch eine Nebenstation 2 ein externes Datenpaket an dem Dateneingang der Nebenstation 2 empfangen wird, werden das empfangene externe Datenpaket gleichzeitig wie das interne Datenpaket mit den bereitgestellten Daten an dem Datenausgang der betreffenden'Nebenstation 2 ausgegeben.

Dies wird erfindungsgemäß vermieden, dass nach dem Beginn des Sendens des internen Datenpakets mit den bereitgestellten Daten durch die Nebenstation 2 das Weiterleiten eines über den Dateneingang der Nebenstation 2 empfangenen externen Datenpakets unterbunden wird. Vorzugsweise erfolgt das Blockieren des Weiterleitens des empfangenen externen Datenpakets solange, bis das empfangene externe Datenpaket beendet ist, so dass ein nachfolgendes externes Datenpaket ordnungsgemäß durch die Nebenstationen 2 wieder weitergeleitet werden kann. Dies hat den Vorteil, dass nach Beenden des Sendens des in der betreffenden Nebenstation 2 bereitgestellten internen Datenpakets kein Rest bzw. hinterer Abschnitt des empfangenen externen Datenpakets an den Datenausgang weitergeleitet wird. Dies hätte das Eintreffen von ungültigen Daten an der nachfolgenden Netzwerkstation zur Folge.

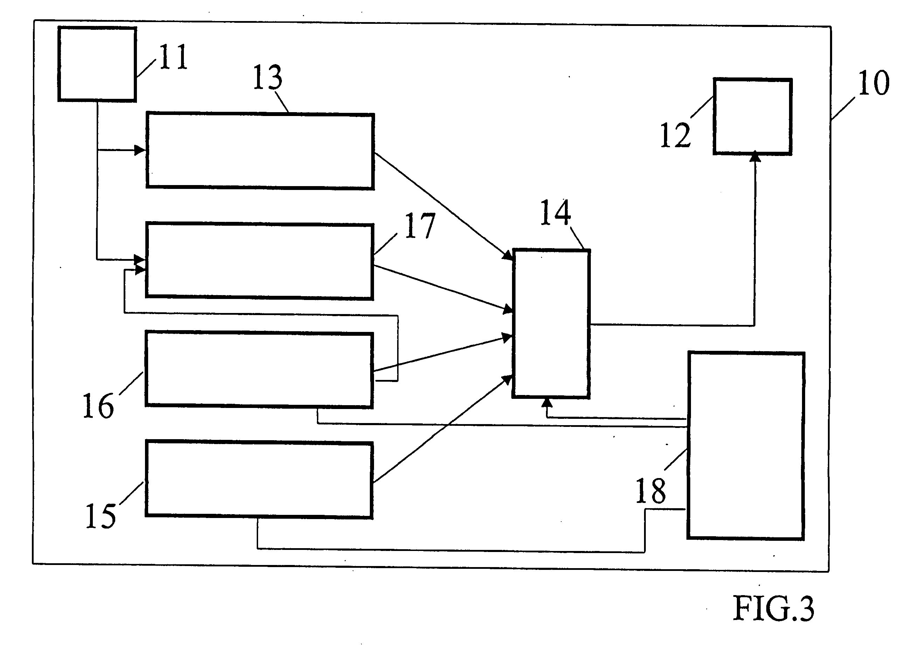

Die Fig. 3 zeigt beispielhaft eine Netzwerkstation zum Aufbau einer ringförmigen Netzwerktopologie, wie sie in Fig. 1a dargestellt ist. Die Netzwerkstation 10 weist eine Dateneingangsschnittstelle 11 auf, über die Daten von dem Datennetzwerk empfangen werden können. Es ist weiterhin eine Datenausgangsschnittstelle 12 vorgesehen, über die Daten in das Datennetzwerk an die nächste Netzwerkstation ausgegeben werden können. Mit der Dateneingangsschnittstelle 11 ist ein Zwischenverstärker 13 verbunden, der die empfangenen externen Daten verstärkt und an einen ersten Eingang eines Multiplexers 14 weiterleitet. Weiterhin ist eine erste Datenbereitstellungseinheit 15 und eine zweite Datenbereitstellungseinheit 16 vorgesehen.

Die erste Datenbereitstellungseinheit 15 ist so gestaltet, dass sie während des IP-Kommunikationskanals, d.h. während des Zeitfensters, in dem die Netzwerkteilnehmer beliebig Datenpakete senden können, ein internes Datenpaket aus den bereitgestellten Daten bildet. Die zweite Datenbereitstellungseinheit 16 liefert die bereitgestellten Daten in einer Form, in der sie während des Echtzeitkommunikationskanals in einen Zeitschlitz in einen an der Dateneingangsschnittstelle 11 empfangenes externes Datenpaket eingefügt werden kann. Ein Ausgang der zweiten Datenbereitstellungseinheit 16 ist sowohl mit einem dritten Eingang des Multiplexers 14 als auch mit einem ersten Eingang einer Prüfdatengenerierungseinheit 17 verbunden. Ein zweiter Eingang der Prüfdatengenerierungseinheit 17 ist mit der Dateneingangsschnittstelle 11 verbunden. Da jedes Datenpaket ein Prüfdatum umfassen muss, um die darin enthaltenen Daten nach einem Empfang auf Fehler zu überprüfen, berechnet die Prüfdatengenerierungseinheit 17 ein neues Prüfdatum anhand dem an der Dateneingangsschnittstelle 11 empfangene externen Datenpaket und anhand der einzufügenden bereitgestellten Daten und gibt das Prüfdatum an einen zweiten Eingang des Multiplexers 14 aus.

Der Multiplexer 14, die erste Datenbereitstellungseinheit 15 und die zweite Datenbereitstellungseinheit 16 sind mit einer Steuereinheit 18 verbunden, die die Steuerung des Kommunikationszyklus übernimmt. Befindet sich das Netzwerkgerät 10 in dem ersten Betriebsmodus, d.h. innerhalb des Zeitbereichs des IP-Kommunikationskanals, so ist der Multiplexer 14 so geschaltet, dass an der Dateneingangsschnittstelle 11 empfangene Datenpakete über den Zwischenverstärker 13 an die Datenausgangsschnittstelle 12 weitergeleitet werden. Sind in der Netzwerkstation 10 interne Daten vorhanden, die über das Datennetzwerk gesendet werden sollen, so werden die bereitgestellten Daten an die erste Datenbereitstellungseinheit 15 geleitet, die aus den bereitgestellten Daten ein internes Datenpaket bildet. Solange sich das Netzwerk bzw. das Netzwerkgerät 10 in dem ersten Betriebsmodus befindet, überprüft die Steuereinheit 18 zunächst, ob an der Dateneingangsschnittstelle 11 gerade ein Datenpaket empfangen wird. Wird kein Datenpaket an der Dateneingangsschnittstelle 11 empfangen, so steuert die Steuereinheit 18 die erste Datenbereitstellungseinheit 15 an, das aus den bereitgestellten Daten gebildete interne Datenpaket an den Multiplexer 14 auszugeben. Im Wesentlichen gleichzeitig dazu wird der Multiplexer 14 so geschaltet, dass die erste Datenbereitstellungseinheit 15 mit der Datenausgangsschnittstelle 12 verbunden ist. Treffen während des Sendens des Datenpakets durch die erste Datenbereitstellungseinheit 15 ein Datenpaket an der Dateneingangsschnittstelle 11 ein, so steuert die Steuereinheit 18 den Zwischenverstärker 13 so an, dass dieser das empfangene Datenpaket nicht weiterleitet sondern verwirft.

Nach dem Ende des Sendens des internen Datenpakets durch die erste Datenbereitstellungseinheit 15 schaltet die Steuereinheit den Multiplexer 14 so, dass der Zwischenverstärker 13 wieder mit der Datenausgangsschnittstelle 12 in Verbindung steht. Da es nun vorkommen kann, dass ein hinterer Teil eines über die Dateneingangsschnittstelle 11 empfangenen Datenpakets über den Zwischenverstärker 13 und den Multiplexer 14 an die Datenausgangsschnittstelle 12 weitergeleitet werden würde, kann die Steuereinheit 18 zunächst den Multiplexer 14 so gestaltet belassen, dass die erste Datenbereitstellungseinheit 15 mit der Datenausgangsschnittstelle 12 in Verbindung bleibt. Dies hat den Vorteil, dass ein hinterer Abschnitt eines Datenpakets, der von einem weiteren Netzwerkteilnehmer nicht interpretierbar wäre, nicht von der Netzwerkstation 10 gesendet würde. Nachdem jedoch das Senden des von der ersten Datenbereitstellungseinheit 15 bereitgestellte interne Datenpaket sowie das über die Dateneingangsschnittstelle 11 empfangene Datenpaket beendet sind, schaltet die Steuereinheit 18 den Multiplexer 14 so, dass der Ausgang des Zwischenverstärkers 13 mit der Datenausgangsschnittstelle 12 in Verbindung steht. So können nachfolgende empfangene Datenpakete von der Dateneingangsschnittstelle 11 zu der Datenausgangsschnittstelle 12 weitergeleitet werden. Wenn während des IP-Kommunikationskanals ein aus den bereitgestellten Daten gebildetes internes Datenpaket gesendet wurde und anschließend die Steuereinheit 18 feststellt, dass über die Dateneingangsschnittstelle 11 ein Rest eines externen Datenpakets empfangen wird, steuert die Steuereinheit 18 die erste Datenbereitstellungseinheit 15 so an, dass so genannte Idle-Signale gesendet werden.

In dem zweiten Betriebsmodus, d.h. während des Zeitbereichs, während dem Daten über den Echtzeitkommunikationskanal übertragen werden, schaltet die Steuereinheit 18 während eines Datenpaketes zwischen dem ersten, zweiten und dritten Eingang des Multiplexers 14 um. Üblicherweise wird während des Echtzeitkommunikationskanals zunächst ein oder mehrere erste Datenpakete gesendet, mit denen die Hauptstation 1 Daten an die Nebenstationen 2 überträgt. In diesen Datenpaketen sind mehrere Zeitfenster enthalten, die die Daten für die dem Zeitfenster zugeordnete jeweilige Nebenstation 2 enthalten. In einem oder mehreren zweiten Datenpaketen sendet die Hauptstation 1 lediglich Platzhalterdaten, an denen die Nebenstationen 2 Daten einfügen können, wobei jeder Nebenstation 2 ein bestimmtes Zeitfenster, d.h. eine vorbestimmte Position in dem Datenpaket zugeordnet ist. Während des Echtzeitkommunikationskanals ist zunächst der Multiplexer 14 so angesteuert, dass der Zwischenverstärker 13 mit der Datenausgangsschnittstelle 12 verbunden ist.

Während des Empfangens eines der ersten Datenpakete analysiert der Zwischenverstärker 13 die empfangenen Daten und stellt unter Umständen die aus dem ersten Datenpaket entnommenen Daten der Netzwerkstation zur Verfügung. Auch beim Empfangen der zweiten Datenpakete des Echtzeitkommunikationskanals bleibt der Zwischenverstärker 13 zunächst mit der Datenausgangsschnittstelle 12 verbunden, bis zu dem Zeitpunkt, an dem das Zeitfenster beginnt, das der betreffenden Netzwerkstation 10 zugeordnet ist. Dann wird der Multiplexer 14 so geschaltet, dass die zweite Datenbereitstellungseinheit 16 mit der Datenausgangsschnittstelle 12 verbunden wird und die bereitgestellten internen Daten während des Zeitfensters in das externe Datenpaket einfügen kann. Nach dem Ausgeben der von der zweiten Datenbereitstellungseinheit 16 bereitgestellten internen Daten schaltet die Steuereinheit den Multiplexer 14 wieder zurück, so dass der Zwischenverstärker 13 die restlichen Daten des externen zweiten Datenpakets an die Datenausgangsschnittstelle 12 ausgibt.

Die zweite Datenbereitstellungseinheit 16 stellt die bereitgestellten Daten auch der Prüfdatenerzeugungseinheit 17 zur Verfügung, die ebenfalls das zweite Datenpaket empfängt. Die Prüfdatengenerierungseinheit erzeugt Prüfdaten, die dem zweiten Datenpaket hinzugefügt werden. Dazu wird ein entsprechender zeitlichen Position des Datenpakets der Multiplexer 14 durch die Steuereinheit 18 so geschaltet, dass die Prüfdatengenerierungseinheit 17 über den Multiplexer 14 an die Datenausgangsschnittstelle 12 angelegt ist. Dann wird das Prüfdatum gesendet und die Steuereinheit schaltet anschließend den Multiplexer 14 so, dass erneut der Zwischenverstärker 13 mit der Datenausgangsschnittstelle 12 verbunden ist.

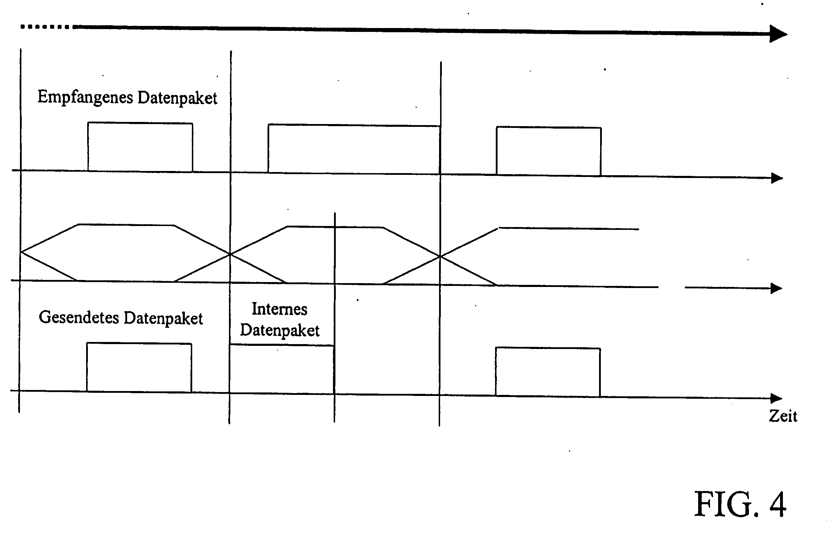

In Fig. 4 ist der Zeitablauf von aufeinander folgenden Datenpaketen während eines IP-Kommunikationskanals dargestellt, wenn von der Netzwerkstation 10 ein internes Datenpaket gesendet werden soll. Im ersten Teil erkennt man, dass der Zwischenverstärker das empfangene Datenpaket verstärkt und über die Datenausgangsschnittstelle 12 ausgibt. Soll anschließend ein internes Datenpaket gesendet werden, wird zunächst überprüft, dass kein externes Datenpaket über die Dateneingangsschnittstelle 11 empfangen wird. Ist dies der Fall, so wird wie im zweiten Teil des Diagramms der Fig. 4 gezeigt, das interne Datenpaket gesendet. Wird nach Beenden des Sendens des internen Datenpakets erkannt, dass über die Dateneingangsschnittstelle ein externes Datenpaket empfangen wird, so wird dies nicht an der Datenausgangsschnittstelle 12 ausgegeben, solange, bis dieses externe Datenpaket beendet ist und erst anschließend, wie im dritten Teil des Diagramms der Fig. 4 gezeigt, ein nächstes empfangenes externes Datenpaket über die Datenausgangsschnittstelle 12 an die nächste Netzwerkstation weitergeleitet.

## Patentansprüche

1. Netzwerkstation (10) für ein Datennetzwerk zum Empfangen von externen Daten und Senden von geräteintern bereitgestellten Daten,
mit einem Zwischenverstärker (13) **zum Ausgeben** ein**es** an einem Dateneingang (11) empfangene**n** externe**n** Datenpaket**s** an eine**n** Datenausgang (12),
mit einer ersten Datenbereitstellungseinheit (15) **zum Senden** ein**es** aus den bereitgestellten Daten generierten interne**n** Datenpaket**s** über den Datenausgang (12); und
mit einer Schalteinrichtung (14) zum Unterbrechen des Datenpfades zwischen dem Dateneingang (11) und dem Datenausgang (12); **dadurch gekennzeichnet, dass**
eine Steuereinheit (18) **vorgesehen ist,** die **derart** mit der Schalteinrichtung (14) verbunden ist, **dass** in einem ersten Betriebsmodus das Ausgeben des empfangenen externen Datenpakets über den Datenausgang (12) blockiert w**ird,** wenn das interne Datenpaket mithilfe der Datenbereitstellungseinheit über den Datenausgang ausgegeben wird, und das Ausgeben des empfangenen Datenpakets mithilfe des Zwischenverstärkers über den Datenausgang (12) zu**gelassen wird**, wenn kein internes Datenpaket über die erste Datenbereitstellungseinheit ausgegeben wird.

2. Netzwerkstation (10) nach Anspruch 1, wobei die Steuereinheit (18) die Schalteinrichtung (14) so steuert, dass in dem ersten Betriebsmodus das Ausgeben des empfangenen externen Datenpakets mithilfe des Zwischenverstärkers über den Datenausgang (12) solange blockiert wird, bis das empfangene externe Datenpaket beendet ist.

3. Netzwerkstation (10) nach Anspruch 1 oder 2, wobei die Steuereinheit zyklisch während eines ersten Zeitabschnitts in dem ersten Betriebsmodus und während eines zweiten Zeitabschnitts in einem zweiten Betriebsmodus **arbeitet,**
wobei eine zweite Datenbereitstellungseinheit (16) zum Senden der bereitgestellten Daten vorgesehen ist,
wobei die Steuereinheit (18) mit der Schalteinrichtung (14) **derart** verbunden ist, **dass** in dem zweiten Betriebsmodus der Datenausgang (12) wechselweise so mit dem Zwischenverstärker (13) und der zweiten Datenbereitstellungseinheit (16) **verbunden wird**, dass ein Teil eines bestimmten, an dem Dateneingang (11) empfangenen Datenpaketes von dem Zwischenverstärker (13) an den Datenausgang (12) ausgegeben wird und dass die bereitgestellten Daten an einer zeitlich bestimmten Position des bestimmten Datenpakets in das Datenpaket eingefügt werden.

4. Netzwerkstation (10) nach Anspruch 3, wobei eine Prüfdateneinheit (17) vorgesehen ist, um zumindest in dem zweiten Betriebsmodus das empfangene externe Datenpaket von dem Dateneingang (11) und die bereitgestellten internen Daten von der zweiten Datenbereitstellungseinheit (16) zu erhalten und ein Prüfdatum zu generieren, wobei die Steuereinheit (18) die Schalteinrichtung (14) so ansteuert, dass an einer weiteren zeitlich bestimmten Position des empfangenen externen Datenpakets das Prüfdatum dem empfangenen Datenpaket hinzugefügt wird.

5. Verfahren zum Empfangen von externen Datenpaketen und Senden von geräts intern bereitgestellten Daten in einem Datennetzwerk, mit folgenden Schritten, die einen ersten Betriebsmodus definieren:
Ausgeben eines empfangenen externen Datenpakets an einen Datenausgang;
Bereitstellen eines internen Datenpakets, das die geräteintern bereitgestellten Daten umfasst;
Ausgeben des bereitgestellten internen Datenpakets über einen Datenausgang;
**dadurch gekennzeichnet, dass**
d**as** Ausgeben eines von dem Datennetzwerk empfangenen Datenpakets an dem Datenausgang **blockiert wird,** solange das bereitgestellte interne Datenpaket auf das Datennetzwerk ausgegeben wird; **und dass**
**das Ausgeben des empfangenen Datenpakets über den Datenausgang (12) zugelassen wird, wenn kein internes Datenpaket ausgegeben wird.**

6. Verfahren nach Anspruch 5, wobei das Ausgeben des empfangenen externen Datenpakets auf das Datennetzwerk solange blockiert wird, bis das empfangene externe Datenpaket beendet ist.

7. Verfahren nach Anspruch 5 oder 6, wobei während eines ersten Zeitabschnitts der erste Betriebsmodus und während eines zweiten Zeitabschnitts ein zweiter Betriebsmodus eingenommen wird, wobei der zweite Betriebsmodus folgende Schritte umfasst:
Bereitstellen von Sendedaten;
Senden eines Teils eines bestimmten empfangenen externen Datenpakets über das Datennetzwerk;
Einfügen der bereitgestellten internen Daten an einer zeitlich bestimmten Position in das bestimmte externe Datenpaket.

8. Verfahren nach Anspruch 7, wobei in dem zweiten Betriebsmodus die weiteren Schritte vorgesehen sind:
Bestimmen eines Prüfdatums aus dem bestimmten empfangenen externen Datenpaket und den bereitgestellten internen Daten,
Einfügen des Prüfdatums bei einer weiteren zeitlich bestimmten Position in das bestimmte empfangene externe Datenpaket.

## Claims

1. Network station (10) for a data network for receiving external data and sending data provided internally in the device,
having a repeater (13) for outputting an external data packet, received at a data input (11), to a data output (12),
having a first data provision unit (15) for sending an internal data packet generated from the provided data via the data output (12); and
having a switching device (14) for interrupting the data path between the data input (11) and the data output (12); **characterized in that**
a control unit (18) is provided which is connected to the switching device (14) such that, in a first mode of operation, output of the received external data packet via the data output (12) is blocked if the internal data packet is being output via the data output using the data provision unit, and output of the received data packet via the data output (12) using the repeater is permitted if no internal data packet is being output via the first data provision unit.

2. Network station (10) according to Claim 1, wherein the control unit (18) controls the switching device (14) such that, in the first mode of operation, output of the received external data packet via the data output (12) using the repeater is blocked until the received external data packet has been concluded.

3. Network station (10) according to Claim 1 or 2, wherein the control unit operates cyclically in the first mode of operation during a first time period and in a second mode of operation during a second time period,
wherein a second data provision unit (16) is provided for sending the provided data, and
wherein the control unit (18) is connected to the switching device (14) such that, in the second mode of operation, the data output (12) is alternately connected to the repeater (13) and to the second data provision unit (16) such that a portion of a particular data packet received at the data input (11) is output to the data output (12) via the repeater (13) and that the provided data are inserted into the data packet at a chronologically determinate position in the particular data packet.

4. Network station (10) according to Claim 3, wherein a test data unit (17) is provided in order to receive, at least in the second mode of operation, the received external data packet from the data input (11) and the provided internal data from the second data provision unit (16) and to generate a test data item, wherein the control unit (18) actuates the switching device (14) such that the test data item is added to the received data packet at another chronologically determinate position in the received external data packet.

5. Method for receiving external data packets and sending data provided internally in the device in a data network, having the following steps, which define a first mode of operation:
a received external data packet is output to a data output;
an internal data packet comprising the data provided internally in the device is provided;
the provided internal data packet is output via a data output;
**characterized in that**
output of a data packet received from the data network at the data output is blocked while the provided internal data packet is being output to the data network; and **in that**
output of the received data packet via the data output (12) is permitted if no internal data packet is being output.

6. Method according to Claim 5, wherein output of the received external data packet to the data network is blocked until the received external data packet has been concluded.

7. Method according to Claim 5 or 6, wherein the first mode of operation is adopted during a first time period and a second mode of operation is adopted during a second time period, the second mode of operation comprising the following steps:
transmission data are provided;
a portion of a particular received external data packet is sent via the data network;
the provided internal data are inserted into the particular external data packet at a chronologically determinate position.

8. Method according to Claim 7, wherein the following further steps are provided in the second mode of operation:
a test data item is determined from the particular received external data packet and the provided internal data,
the test data item is inserted into the particular received external data packet at another chronologically determinate position.

## Revendications

1. Installation de réseau (10) destinée à un réseau de données pour la réception dé données d'origine externe et l'émission de données fournies de manière interne par des appareils, comprenant :
un amplificateur intermédiaire (13) pour émettre un paquet de données externes reçu par une entrée de données (11) vers une sortie de données (12),
une première unité de fourniture de données (15) pour émettre un paquet de données internes, généré à partir de données fournies par l'intermédiaire de la sortie de données (12), et
une installation de commutation (14) pour couper le chemin des données entre l'entrée de données (11) et la sortie de données (12),
**caractérisée par**
une unité de commande (18) reliée à l'installation de commutation (14) pour bloquer dans un premier mode de fonctionnement, l'émission par la sortie de données (12) du paquet de données reçu de l'extérieur soit bloquée si le paquet de données internes est émis par la sortie de données à l'aide de l'unité de préparation de données, et
pour autoriser l'émission du paquet de données reçu à l'aide de l'amplificateur intermédiaire par la sortie de données (12) si aucun paquet de données internes n'est émis par l'intermédiaire de la première unité de fourniture de données.

2. Installation de réseau (10) selon la revendication 1,
selon laquelle
l'unité de commande de données (18) commande l'installation de commutation (14) pour bloquer dans le premier mode de fonctionnement, l'émission par la sortie de données (12)du paquet de données externes reçu par l'intermédiaire de l'amplificateur intermédiaire jusqu'à la fin du paquet de données externes reçu.

3. Installation de réseau (10) selon la revendication 1 ou 2,
selon laquelle
l'unité de commande travaille de manière cyclique pendant un premier segment de temps dans un premier mode de fonctionnement, et pendant un second segment de temps, dans un second mode de fonctionnement,
une seconde unité de préparation de données (16) est prévue pour émettre les données préparées,
l'unité de commande (18) est reliée à l'installation de commutation (14) de façon que dans le second mode de fonctionnement, la sortie de données (12) soit reliée alternativement à l'amplificateur intermédiaire (13) et à la seconde unité de préparation,de données (16) pour qu'une partie d'un certain paquet de données reçu à l'entrée de données (11) soit transmise de l'amplificateur intermédiaire (13) à la sortie de données (12), et que
les données fournies soient insérées dans le paquet de données dans une position déterminée en fonction du temps dans le paquet déterminé de données.

4. Installation de réseau (10) selon la revendication 3,
selon laquelle
il est prévu une unité de contrôle de données (17) pour obtenir au moins dans le second mode de fonctionnement, le paquet de données externes reçu par l'entrée de données (11) et les données internes fournies par la seconde unité de préparation de données (16) et de générer une données de contrôle, et
l'unité de commande (18) commande l'installation de commutation (14) pour ajouter la donnée de contrôle dans le paquet de données reçu à une autre position déterminée dans le temps du paquet de données externes reçu.

5. Procédé de réception de paquets de données externes et d'émissions de données fournies de manière interne à l'appareil dans un réseau de données comprenant les étapes suivantes définissant un premier mode de fonctionnement :
émission d'un paquet de données externes reçu vers une sortie de données,
fourniture d'un paquet de données internes comprenant les données fournies de manière interne à l'appareil,
émission du paquet de données internes fournies par une sortie de données,
**caractérisé en ce que**
l'émission d'un paquet de données reçu du réseau de données internes est bloquée à la sortie de données aussi longtemps que le paquet de données internes fournies est émis sur le réseau de données, et l'émission du paquet de données reçu est autorisée par la sortie de données (12) lorsque aucun paquet de données internes n'est émis.

6. Procédé selon la revendication 5,
selon lequel
l'émission du paquet de données externes reçu est bloquée vers le réseau de données jusqu'à ce que le paquet de données externes reçu soit terminé.

7. Procédé selon la revendication 5 ou 6,
selon lequel
au cours d'un premier segment de temps, on utilise un premier mode de fonctionnement et au cours d'un second segment de temps, on utilise un second mode de fonctionnement, et le second mode de fonctionnement comprend les étapes suivantes:
fourniture de données d'émission,
émission d'une partie d'un certain paquet de données externes reçu par le réseau de données,
insertion des données internes fournies dans une position déterminée dans le temps dans le paquet de données externes déterminées.

8. Procédé selon la revendication 7,
selon lequel
le second mode de fonctionnement, comporte les autres étapes suivantes :
détermination d'une données de contrôle à partir du paquet de données externes déterminé, reçu et des données internes fournies,
insertion de la données de contrôle pour une autre position déterminée dans le temps dans le paquet de données externes déterminées, reçu.
